# EUROPEAN PATENT SPECIFICATION

(11) **EP 1 273 134 B1**
(45) Date of publication and mention of the grant of the patent: **10.11.2004**
(21) Application number: 01923242.0
(22) Date of filing: 10.04.2001
(51) Int. Cl.: H04L 12/28, H04L 12/56, H04L 29/06, H04Q 7/38

(54) **A TECHNIQUE FOR SETTING UP CALLS IN INTERNET PROTOCOL MOBILE NETWORK**
VERFAHREN ZUM AUFBAU VON ANRUFEN IN EINEM MOBILEN INTERNET-PROTOKOLL-NETZWERK
TECHNIQUE D'ETABLISSEMENT D'APPELS DANS UN RESEAU MOBILE A PROTOCOLE INTERNET

(30) Priority: 10.04.2000 US 546209
(43) Date of publication of application: 08.01.2003
(73) Proprietor: Nokia Corporation, 02150 Espoo (FI)
(72) Inventor: HURTTA, Tuija, FIN-02660 Espoo (FI); BERTENYI, Balazs, H-1118 Budapest (HU); GREIS, Marc, Irving, Texas 75063 (US)
(74) Representative: Becker Kurig Straus
(86) International application number: PCT/US2001/011593
(87) International publication number: WO 2001/078328

(56) References cited:
- WO-A-99/37103
- MARTIGNONI S ET AL: "Call control in the mobile terminal of a wireless ATM network" BROADBAND COMMUNICATIONS, 1998. ACCESSING, TRANSMISSION, NETWORKING. PROCEEDINGS. 1998 INTERNATIONAL ZURICH SEMINAR ON ZURICH, SWITZERLAND 17-19 FEB. 1998, NEW YORK, NY, USA,IEEE, US, 17 February 1998 (1998-02-17), pages 135-141, XP010277037 ISBN: 0-7803-3893-6

## Description

### TECHNICAL FIELD

The present invention relates to Internet Protocol (IP)-based mobile networks and, more particularly, the present invention relates to a method for setting up a communication channel according to the preamble of claim 1. Such a method is known eg from WO 9 937 103.

In general, packet switched wireless networks provide communications for mobile terminals with no physical connection required for network access. The General Packet Radio Service (GPRS) in the Global System for Mobile Communications (GSM) and the Universal Mobile Terrestrial System (UMTS) have both been developed to provide wireless communications networks with a packet switched side, as well as a circuit switched side.

The specification for a 3rd General Internet Protocol (3G.IP) network with further improvements have been released by the 3rd General Partnership Project (www.3gpp.org). Document 3GPP 3G TS 24.008 V3.3.0 (3-2000); 3rd Generation Partnership Project; Universal Mobile Telecommunications System; Mobile radio interface layer 3 specification; Core Network Protocols - Stage 3; (Release 1999), that is considered to represent the closest state of the art and that is discussed in the description on page 1, discloses setting up a call by sending a PDP activate context request message to the network, which comprises information on requested QoS class. Release 99 of the 3G.IP specifications provides that a network subscriber can have one or more packet data protocol (PDP) addresses. Each PDP address is described by one or more PDP contexts in the Mobile Station (MS), the Service GPRS Service Node (SGSN), and the Gateway GPRS Service Node (GGSN). A GGSN is a gateway to an external network. Each PDP context may have routing and mapping information for directing the transfer of data to and from its associated PDP address and a traffic flow template (TFT) for reviewing the transferred data.

Each PDP context can be selectively and independently activated, modified, and deactivated. The activation state of a PDP context indicates whether data transfer is enabled for a corresponding PDP address and TFT. If all PDP contexts associated with the same PDP address are inactive or deactivated, all data transfer for that PDP address is disabled. All PDP contexts of a subscriber are associated with the same Mobility Management (MM) context for the International Mobile Subscriber Identity (IMSI) of that subscriber. Setting up a PDP context means setting up a communications channel.

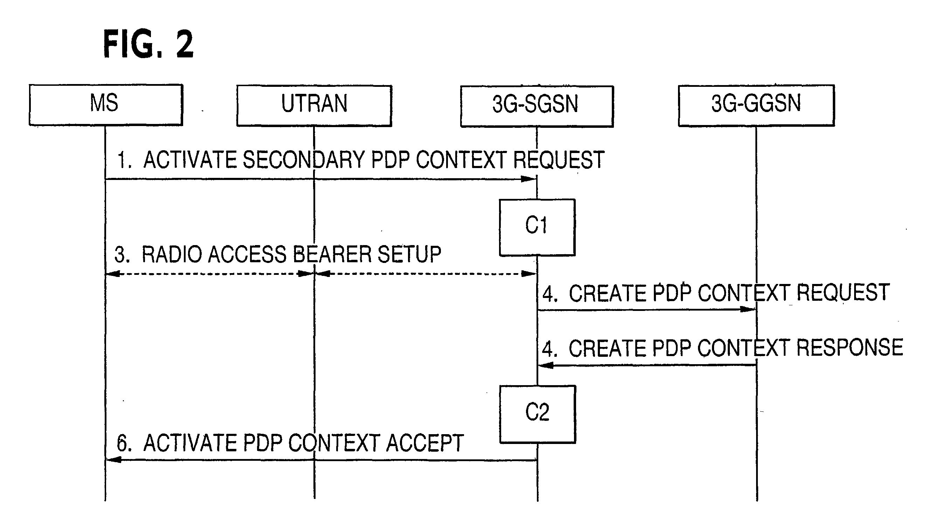

An example of the PDP context activation procedure is shown in FIG. 2. The activate PDP context request message sent in step 1 includes a number of parameters. The parameters include a PDP address and an Access Point Name (APN). The PDP address is used to indicate whether a static PDP or dynamic PDP address is required. The APN is a logical name referring to the gateway GPSR support node (GGSN) to be used. In step 3, the SGSN sends a Radio Access Bearer (RAB) setup message to the UMTS Terrestrial Radio Access Network (UTRAN). In step 4, the SGSN sends a Create PDP Context Request message to the affected GGSN. The GGSN decides whether to accept or reject the request. If it accepts the request, it modifies its PDP context table and returns a Create PDP Context Response message. The SGSN then sends an activate PDP Context Accept message to the Mobile Terminal in step 5.

In spite of the numerous details provided in the aforementioned Protocol, many features associated with IP mobile networks have not been dealt with. Specifically, the techniques for setting up multimedia calls in IP-based mobile networks have yet to be incorporated in the aforementioned Protocol. It is these details to which the present invention is directed.

### DISCLOSURE OF INVENTION

In the present invention, the signaling exchanged by the application layer in the MS (mobile station) is arranged in accordance with the procedure/messages that need to be performed by the transport levels in the MS and in the network in order to set up multimedia calls.

When the application level in the MS sends a set up message to set up a multimedia call, before sending such a message over the radio interface, the MS performs the appropriate procedures, depending on the type of access adopted, to set up the appropriate bearers over the radio interface and in the network to satisfy the call requirements specified by the application level in the set up message.

The technique of the present invention applies to both the case of mobile originated calls and mobile terminated calls, the MS performing the above noted transport level procedures after having received a set up message and before sending a confirmation/call acceptance message back to the calling party.

Furthermore, in accordance with the technique of the present invention, the allocation of radio resources for PDP (packet data protocol) contexts that will be used to carry the media of a multimedia IP call is delayed so that no radio resources are allocated to the PDP contexts activated before the call control signaling is exchanged. The radio resources are allocated only when the call signaling has been completed and the called party has accepted the call and indicated the call characteristics that it can support.

Still furthermore, in accordance with one aspect of the present invention, an indication can be forwarded from the SGSN (Serving GPRS (General Packet Radio Service) Support Node) to the GGSN (Gateway GPRS Support Node) advising that no packets are to be sent on the PDP context because there are no radio resources for the PDP context.

Also, in accordance with another aspect of the present invention, quality of service (QoS) negotiations for RAB (Radio Access Bearer) can be effected with an additional parameter that contains either a list of alternative values or the lowest acceptable value.

In accordance with claim 1 the present invention, for transferring voice traffic, provides for an indication that may be added to the Activate PDP Context Request and to the Create PDP Context Request messages.

The invention is defined by the features as described in claim 1.

### BRIEF DESCRIPTION OF THE DRAWINGS

The foregoing and a better understanding of the present invention will become apparent from the following detailed description of example embodiments and the claims when Reading connection with the accompanying drawings, all forming a part of the disclosure of this invention. While the foregoing and following written and illustrated disclosure focuses on disclosing example embodiments of the invention, it should be clearly understood that the same is by way of illustration and example only and the invention is not limited thereto. The spirit and scope of the present invention are limited only by the terms of the appended claims.

Figure 1 is a generalized block diagram of the architecture of a packet switched wireless communication network in which the example embodiments of the invention may be practiced.

Figure 2 is a generalized signaling flow diagram illustrating secondary PDP context activation procedures.

Figure 3 is a generalized signal flow diagram illustrating a call set up arrangement in accordance with a technique of the present invention.

Figure 4 is a generalized signal flow diagram illustrating a delayed resource deployment arrangement in accordance with a technique of the present invention.

### BEST MODE(S) FOR CARRYING OUT THE INVENTION

Before beginning a detailed description of the subject invention, mention of the following is in order, when appropriate, like reference numerals and characters may be used to designate identical, corresponding, or similar components in differing drawing figures. Furthermore, in the detailed description to follow, example sizes/models/values/ranges may be given, although the present invention is not limited thereto.

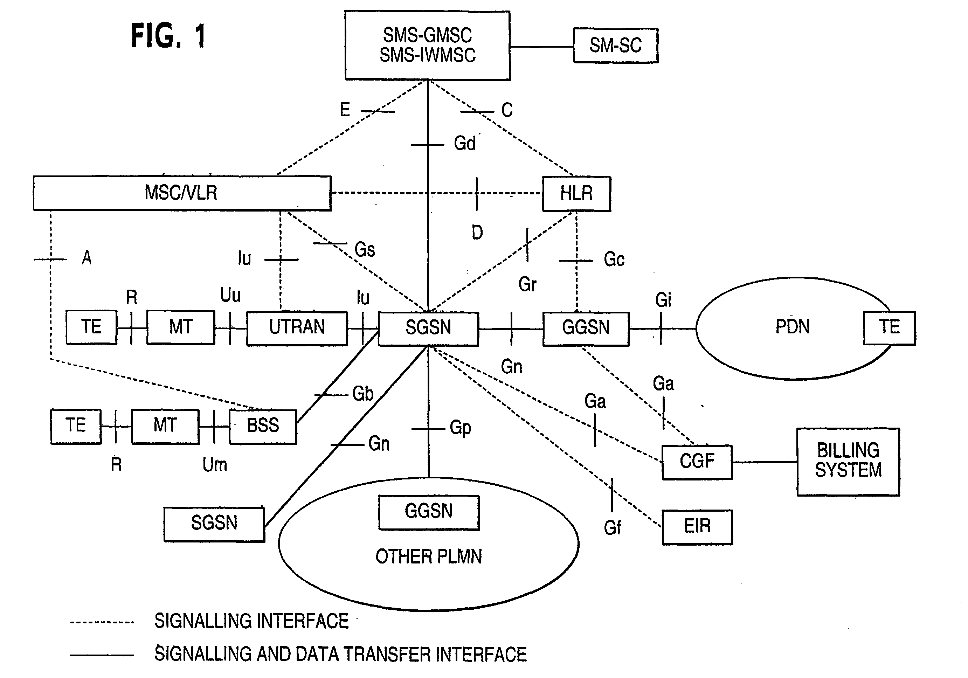

An example of a network architecture supporting these specifications is the wireless communications network shown in the block diagram of FIG. 1. The various elements of the network and their functions are described in the General Packet Radio Service (GPRS) Service Description, Stage 2, 3G TS 23.060, Version 3.2.1, published by the 3rd Generation Partnership Project (www.3gpp.org). The elements and their functions may be described in earlier or later versions of the 3 G TS 23.060 specifications or maybe those of any other known packet switched wireless communications network. The description of network elements and their functions are merely a non-limiting example of packet switched wireless communication networks.

Several elements of the example network illustrated in FIG. 1 are particularly relevant to this invention. The Mobile Terminal (MT), commonly referred to as a cell phone or a mobile phone, is only one possible part of User Equipment (UE). Typically, Terminal Equipment (TE), used together with a Mobile Terminal (MT), constitutes User Equipment (UE). Any UE may be utilized in conjunction with this invention so that it operates or can be programmed to operate in the manner described below. The UMTS Terrestrial Radio Access Network (UTRAN) and the Base Station System (BSS) in GPRS manage and control the radio access between the network and a number of Mts.

The Serving GPRS Support Node (SGSN) is the node that serves the MT. At PDP Context Activation, the SGSN establishes a PDP context used for routing purposes. The Gateway GPRS Support Node (GGSN) is the node accessed by the packet data network due to evaluation of the PDP address. It contains routing information for attached GPRS users. The routing information is used to tunnel Protocol Data Units (PDUs) to the SGSN. The SGSN and GGSN functionalities may reside in different physical nodes or may be combined in the same physical node, for example, an Internet GPRS Support Node (IGSN).

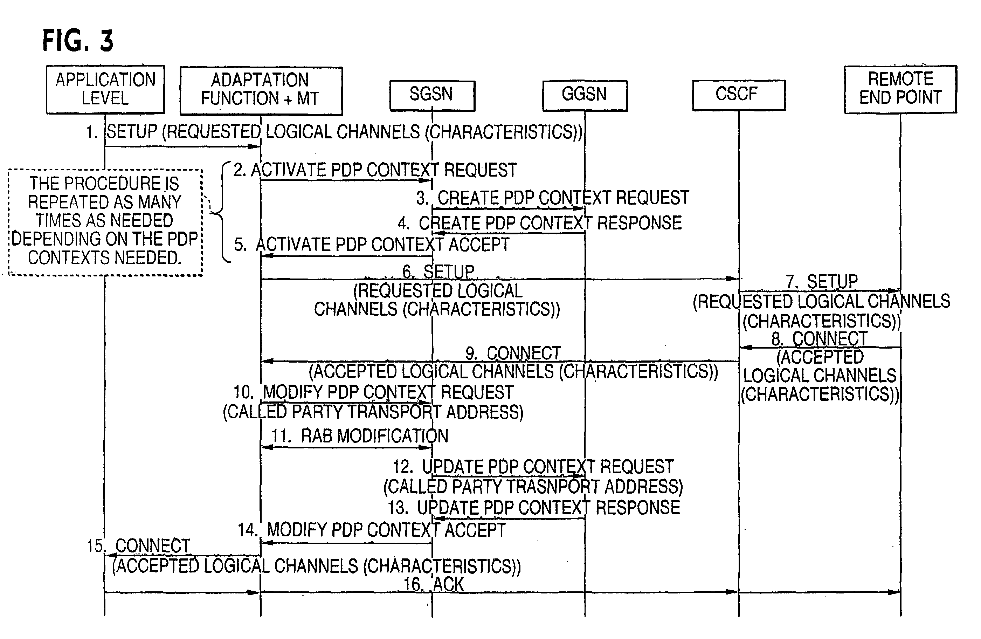

Figure 3 illustrates the call set-up arrangement in accordance with the technique of the present invention. The IP-based mobile network architecture includes an application level and a transport level. The transport level protocols and mechanisms are usually dptimized for the specific type of access whereas the application level is normally generic, that is-independent of the type of access.

In IP-based mobile networks, the application level in the MS sets up a call by signaling to the peer entity and exchanging messages of a call control protocol over an IP connection provided by the transport levels. In setting up a call for the application level, the underlying transport level has to set up the transport bearers over the radio interface and in the network. For an IP-based mobile network, setting up of transport bearers means allocating radio resources and network resources. Since the call control signaling is transparently exchanged over an IP connection provided by the transport level, the transport levels are not aware that a call is being set up.

As illustrated in Figure 3, the technique in accordance with the present invention begins at the application level at step 1 in which a set up indication is forwarded from the application level to the adaptation function +MT (Mobile Terminal) level, the set up indication including the requested logical channels and characteristics.

At step 2, an Activate PDP Context Request is forwarded to the SGSN. In response thereto, in step 3,the SGSN creates a Create PDP Context Request and forwards it to the GGSN. In response to the Create PDP Context Request forwarded by the SGSN, in step 4, the GGSN creates a Create PDP Context Response and forwards it to the SGSN. In turn, in response to the PDP Context Response forwarded by the GGSN to the SGSN, in step 5,the SGSN forwards an Activate PDP Context Accept to the adaptation function +MT level.

The above noted procedures in steps 2-5 are repeated as many times as needed depending on the PDP contexts needed.

Upon the completion of the last procedure in step 5, the adaptation function +MT level forwards the set up indication, including requested logical channels and characteristics, to the CSCF (Call State Control Function) in step 6. The CSCF, in turn,, forwards the set up indication, including requested logical channels and characteristics, to the remote end point in step 7. The remote end point then forwards a connect indication, including accepted logical channels and characteristics, back to the CSCF in step 8. The CSCF then forwards the connect indication, including accepted logical channels and characteristics, to the adaptation function +MT level in step 9.

In step 10, the adaptation function +MT level forwards a Modify PDP Context Request, including a Called Party Transport Address, to the SGSN. In step 11, the adaptation function +MT level and the SGSN performs an RAB Modification. In step 12, in response to the RAB Modification, the SGSN forwards an Updated PDP Context Request, including the Called Party Transport Address, to the GGSN. In response to the Updated PDP Context Request, the GGSN, in step 13, forwards an Updated PDP Context Response to the SGSN. In response thereto, the SGSN, in step 14, forwards a Modified PDP Context Accept to the adaptation function +MT level. The adaptation function +MT level, in turn, forwards a connect indication including accepted logical channels and characteristics to the application level in step 15. Lastly, in step 16, the application level forwards an ACK (acknowledgment) indication to the remote end point via the CSCF.

The technique in accordance with the present invention, as noted above, is based on a very simple mechanism and applies to different types of transport levels. In addition, the technique in accordance with the present invention does not require any interface on the network side for the interaction between the application level and the transport level.

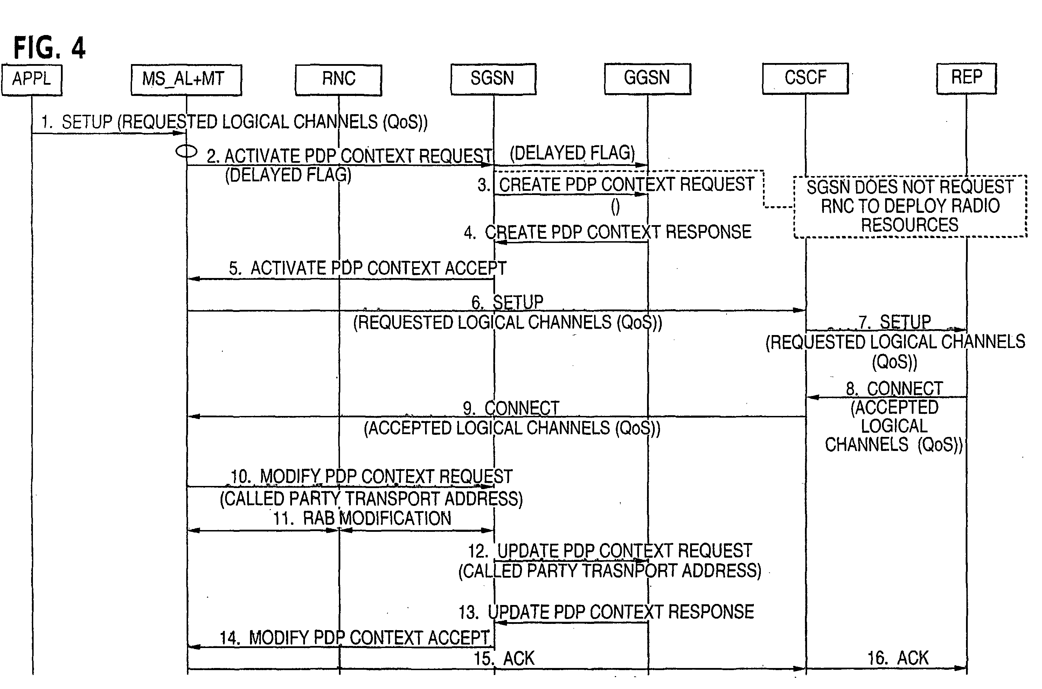

Figure 4 Illustrates another aspect of the technique in accordance with the present invention. As illustrated in the drawing figure, the allocation of resources for PDP contexts that will be used to carry the media of a multimedia IP call is delayed so that no radio resources are allocated to the PDP contexts before the call control signaling is exchanged. Rather, the radio resources are allocated only when the call signaling has been completed and the called party has accepted the call and indicated the call characteristics that it can support.

As illustrated in Figure 4, in step 1, the application level forwards a set up indication, including requested logical channels and characteristics (such as QoS values) , to the adaptation function +MT level.

In step 2, an Activate PDP Context Request including a Delayed Flag is forwarded from the adaptation function +MT level to the SGSN. The Delayed Flag is a new parameter which is added to the Activate PDP Context Request so as to inform the SGSN that no radio resources have been allocated. This ensures that the radio resources will be allocated only after the PDP context has been modified. Note that the Delayed Flag may also be forwarded to the GGSN as well as to the SGSN. While this is optional, it is preferable in that in some arrangements, it is advantageous for the GGSN to be informed that no radio resources have been allocated.

In step 3, the SGSN forwards a Create PDP Context Request to the GGSN which in turn forwards a Create PDP Context Response back to the SGSN in step 4. In step 5,the SGSN forwards an Activate PDP Context Accept to the adaptation function +MT level. In step 6,the adaptation function +MT level forwards a set up indication including requested logical channels and characteristics to the CSCF which, in turn, forwards a set up indication including requested logical channels and characteristics to the remote end point in step 7.

In step 8,the remote end point forwards a connect indication including accepted logical channels and characteristics back to the CSCF. In step 9, a connect indication including accepted logical channels and characteristics are forwarded from the CSCF to the adaptation function +MT level. In step 10, the adaptation function +MT level creates a Modified PDP Context Request including the Called Party Transport Address and forwards it to the SGSN.

In step 11, the SGSN, together with the adaptation function +MT level and an RNC, for example, perform an RAB Modification. In step 12, the SGSN forwards an Updated PDP Context Request including the Called Party Transport Address to the GGSN which, in turn, in step 13, forwards an Updated PDP Context Response back to the SGSN. In step 14, the SGSN forwards a Modified PDP Context Accept to the adaptation function +MT level which in turn forwards an ACK indication to the CSCF in step 15 which in turn forwards it to the remote end point in step 16.

In setting up a call for an application, the underlying transport network sets up the transport bearers over the radio interface and in the network. For a wireless network, the setting up of transport bearers means the allocation of radio resources.

By utilizing the above noted call setup technique in accordance with the present invention utilizing the delayed flag, radio resources over the wireless interface are not wasted due to unsuccessful call setups, (for example, called party busy, no answer, wrong number, etc.). Any effort to maximize the usage performance of radio resources is a must for wireless operators with limited frequency spectrum availability.

Before the call control signaling is exchanged between the calling party and the called party, the only information available regarding the radio and network resources needed for the call of the resources requested by the calling party. Since the called party may not accept the call features, (for example, medias and QoS), proposed by the calling party and rather proposes a subset of the requested features, allocating radio and network resources prior to the call signaling being completed leads to a wasted resources and in fact, the radio resources that have been allocated will be unused during the time between the call initiation and the call setup completion. However, by utilizing the delayed flag in accordance with the technique of the present invention, resources are not wasted since they are allocated only after the PDP Context has been modified.

Furthermore, until the call setup signaling has been performed, the calling party does not know the transport address (IP address plus port number) or the called party and therefore cannot provide the complete TFT (Traffic Flow Template) to the SGSN/GGSN. The technique of the present invention, by utilizing the delayed flag, avoids this problem.

As a modification to the above noted technique in accordance with the present invention which utilizes the delayed flag, as an additional step, the SGSN, upon receiving the delayed flag, forwards the delayed flag to the GGSN as an indication that no packets should be sent on the PDP Context because there are no radio resources, (that is, no RAB), for the PDP context. In addition, the SGSN may set the charging characteristics of the PDP context as "free of charge". The SGSN indicates the charging characteristics of the PDP Context to the GGSN in the Create PDP Context Request message.

In accordance with another aspect of the technique of the present invention, the quality of service (QoS) negotiations for the RAB are effected with an additional parameter that contains either a list of alternative values or the lowest acceptable value. The additional parameter, which will hereinafter be referred to as the Alternative Guaranteed Bit Rate Parameter, is added to both the RANAP RAB Assignment Request and to the SM and possibly CC setup signaling. The Selected RAB parameters are added to the RAB Assignment Response and possibly to the CC, the SM already having it. The addition to the SM and possibly to the CC setup signaling also enhances the negotiation there and according to the present invention uses the same technique. The same technique, with possible additions, could also be used for negotiating other QoS parameters.

Presently, the bit rate parameters include a Maximum Bit Rate and a Guaranteed Bit Rate. The Maximum Bit Rate is defined as the bit rate which is never to be exceeded while the Guarantee Bit Rate is defined as the bit rate never to be reduced below.

For example, if a user wants AMR service with a codec allowing 5-13 kbps, then both the Maximum Bit Rate and the Guaranteed Bit Rate would both be set equal to 13. In accordance with the present invention, the minimum bit rate would be set equal to 5.

As another example, if the user wants video stream service, then the Maximum Bit Rate is set equal to the maximum that the application might use while the Guaranteed Bit Rate is set equal to the requested quality level. In accordance with the present invention, the new minimum bit rate would be set equal to the rate corresponding to the lowest acceptable quality.

Note that the new parameter in accordance with the present invention is only used for negotiation purposes. In addition, if the Guaranteed Bit Rate cannot be provided, and a lower bit rate is provided instead, then the new lower bit rate being provided is treated as the new Guaranteed Bit Rate.

As noted above, the new Alternative Guaranteed Bit Rate contains either a list of alternative rates or the lowest acceptable rate. In the absence of the Alternative Guaranteed Bit Rate parameter, no negotiation is allowed and if the Guaranteed Bit Rate is not available, then the setup fails. The asked bit rates should be updated according to possible downgrading in some parts so that there is no reservation of rates which are set too high in other parts yet to be setup. The list of alternative rates, if used, could be stored as part of the QoS profile so that they could be used during further steps such as reconfiguration or relocation. The functionality is optional for the SGSN, GGSN and the RNC to support, (that is, if negotiation is not supported and the Guaranteed Bit Rate cannot be supported, then the setup fails). The QoS Bit Rate feature may also be used when performing SGSN or RNC handovers and may also be included GTP message sent to the GGSN.

In accordance with another aspect of the technique of the present invention, an indication of a call is added when activating a PDP context or contexts to transfer voice traffic. This indication may be added to the Activate PDP Context Request and to the Create PDP Context Request messages. The indication could either be a new parameter analogous to the Alternative Guaranteed Bit Rate discussed above or even a new QoS traffic class.

As another example, prepaid services for a call may be based on communication between the CSCF and the SCP (Service Control Point) only. The SGSN should not communicate with the SCP if a PDP context is used for a call. The SGSN may communicate with the SCP if a PDP context is activated for other purposes. The communication between the SGSN and the SCP on the PDP context has already been specified in the CAMEL (Customized Applications for Mobil Network Enhanced Logic) Rel 99 specification.

As a further example, as to coordinating the QoS between the GPRS layer and the IP Telephony layer, and accepted call may influence the QoS of the PDP context that is activated for the call. For example, if a normal call is accepted in the IP Telephony layer, it should not be possible to activate a PDP context capable of carrying a video call. For a PDP context used for other purposes, this kind of coordination is not needed.

An advantage of this technique lies in the fact that since voice traffic has very specific statistical characteristics, when the GGSN, SGSN, and RNC decide if they can admit that new PDP context or not, they can admit more PDP contexts which are going to be used for voice traffic. This results in a much more efficient use of the available resources.

For this purpose, such an indication is already included in the RAB (Radio Access Bearer) attributes. The attribute containing this indication is called the "Source Statistics Descriptor" and indicates either Speech or Unknown traffic. In the Release 99, cited in the Background of the Invention above, it would be set by the MSC (Mobile Switching Center), which would know which class certain traffic belongs to. However, in Release 00, telephony traffic is also transmitted over the SGSN as well and accordingly, it is necessary to provide the SGSN with the same information. This can only be effected by also including this parameter in the PDP Context Activation message, (that is, also including this parameter in the UMTS Bearer Service attributes where it is currently not included).

It is to be noted that in the description of the invention above, numerous details known to those skilled in the art have been omitted for the sake of brevity. Such details are readily available in numerous publications including the previously cited Protocol.

This concludes the description of the example embodiments. Although the present invention has been described with reference to a number of illustrative embodiments, it should be understood that numerous other modifications and embodiments can be devised by those skilled the art which will fall within the scope of the principles of this invention. More particularly, reasonable variations and modifications are possible in the component parts and/or arrangements of the subject combination arrangement within the scope of the foregoing disclosure, the drawings, and the appended claims without departing from the spirit of the invention. In addition to variations and modifications in the component parts and/or arrangements, alternative uses will also be apparent to those skilled the art.

## Claims

1. Method for setting up a call in a packet switched wireless network by activating a PDP (packet data protocol) context, said network comprising a first network element, a second network element and a third network element, wherein said first network element is a user equipment (MT), said second network element is a serving GPRS support node (SGSN), and said third network element is a gateway GPRS support node (GGSN), said method comprising the steps:
- creating an activate PDP context request message in said first network element;
- adding an indication of said call to said activate PDP context request , in order to indicate the transfer of voice traffic,
- forwarding said activate PDP context request message to said second network element (SGSN);
- admitting or rejecting said activate PDP context request on the basis of said indication by using specific statistical characteristics of voice traffic and thereby admitting more PDP contexts, in said second network element (SGSN), and in case of admitting
- creating a create PDP context request message in said second network element (SGSN) in response to said received activate PDP context request message, wherein said indication is further added to said create PDP context request
- forwarding said create PDP context request message to said third network element (GGSN), and
- admitting or rejecting said create PDP context request on the basis of said indication, by using specific statistical characteristics of voice traffic and thereby admitting more PDP contexts in said third network element (GGSN).

2. Method according to anyone of the preceding claims, wherein said network is a UMTS network.

3. Method according to anyone of the preceding claims, wherein said network is a GPRS network.

## Patentansprüche

1. Verfahren zum Aufbauen eines Anrufs in einem packetvermittelten drahtlosen Netzwerk durch Aktivieren eines PDP (packet data protocol) Kontextes, wobei das Netzwerk ein erstes Netzwerkelement, ein zweites Netzwerkelement und ein drittes Netzwerkelement umfasst, wobei das erste Netzwerkelement eine Benutzerausrüstung (MT) ist, das zweite Netzwerkelement ein Serving GPRS Support Node (SGSN) ist, und das dritte Netzwerk ein Gateway GPRS Support Node (GGSN) ist, wobei das Verfahren die Schritte umfasst:
- Erzeugen einer PDP-Kontext-Aktivierungsanforderungsnachricht in dem ersten Netzwerkelement;
- Hinzufügen einer Anzeige des Anrufs zu der PDP-Kontext-Aktivierungsanforderungsnachricht, um die Übertragung von Sprachverkehr anzuzeigen;
- Weiterleiten der PDP-Kontext-Aktivierungsanforderungsnachricht an das zweite Netzwerkelement (SGSN);
- Annehmen oder Ablehnen der PDP-Kontext-Aktivierungsanforderungsnachricht, basierend auf der Anzeige durch Verwendung spezifischer statistischer Eigenschaften von Sprachverkehr, und dadurch Zulassen von mehr PDP Kontexten, in dem zweiten Netzwerkelement (SGSN), und im Falle des Annehmens
- Erzeugen einer PDP-Kontext-Erzeugungsanforderungsnachricht in dem zweiten Netzwerkelement (SGSN) in Antwort auf die empfangene PDP Kontext Aktivierungsanforderungsnachricht, wobei die Anzeige weiterhin zu der PDP-Kontext-Erzeugungsanforderungsnachricht hinzugefügt wird;
- Weiterleiten der PDP-Kontext-Erzeugungsanforderungsnachricht zu dem dritten Netzwerkelement (GGSN); und
- Annehmen oder Ablehnen der PDP-Kontext-Erzeugungsanforderungsnachricht basierend auf der Anzeige durch Verwendung spezifischer statistischer Eigenschaften von Sprachverkehr, und dadurch Zulassen von mehr PDP Kontexten, in dem dritten Netzwerkelement (GGSN).

2. Verfahren gemäß irgendeinem der vorhergehenden Ansprüche, wobei das Netzwerk ein UMTS-Netzwerk ist.

3. Verfahren gemäß irgendeinem der vorhergehenden Ansprüche, wobei das Netzwerk ein GPRS-Netzwerk ist.

## Revendications

1. Procédé pour paramétrer un appel dans un réseau sans fil à commutation de paquets en activant un contexte de PDP (protocole de données par paquets), ledit réseau comprenant un premier élément de réseau, un deuxième élément de réseau et un troisième élément de réseau, dans lequel ledit premier élément de réseau est un équipement d'utilisateur (MT), ledit deuxième élément de réseau est un noeud de support GPRS de service (SGSN), et ledit troisième élément de réseau est un noeud de service GPRS de transit (GGSN), ledit procédé comprenant les étapes consistant à :
- créer un message de demande d'activation de contexte de PDP dans ledit premier élément de réseau ;
- ajouter une indication dudit appel à ladite demande d'activation de contexte de PDP, pour indiquer le transfert de trafic vocal,
- expédier ledit message de demande d'activation de contexte de PDP audit deuxième élément de réseau (SGSN) ;
- admettre ou rejeter ladite demande d'activation de contexte de PDP sur la base de ladite indication en utilisant des caractéristiques statistiques spécifiques de trafic vocal et en admettant de ce fait plus de contextes de PDP, dans ledit deuxième élément de réseau (SGSN), et en cas d'admission
- créer un message demande de création de contexte de PDP dans ledit deuxième élément de réseau (SGSN) en réponse audit message de demande d'activation de contexte de PDP reçu, dans lequel ladite indication est de plus ajoutée à ladite demande de création de contexte de PDP,
- expédier ledit message de demande de création de contexte de PDP audit troisième élément de réseau (GGSN), et
- admettre ou rejeter ladite demande de création de contexte de PDP sur la base de ladite indication en utilisant des caractéristiques statistiques spécifiques de trafic vocal et en admettant de ce fait plus de contextes de PDP, dans ledit troisième élément de réseau (GGSN).

2. Procédé selon l'une quelconque des revendications précédentes, dans lequel ledit réseau est un réseau UMTS.

3. Procédé selon l'une quelconque des revendications précédentes, dans lequel ledit réseau est un réseau GPRS.
